# EUROPEAN PATENT APPLICATION

(11) **EP 2 316 737 A1**
(43) Date of publication of application: **04.05.2011**
(21) Application number: 09174263.5
(22) Date of filing: 27.10.2009
(51) Int. Cl.: B65B 35/44

(54) **Separating unit for separating a batch of packages of a product which is pourable within a tube of packaging material from a row of packages, and related method**

(71) Applicant: Tetra Laval Holdings & Finance S.A., 1009 Pully (CH)
(72) Inventor: Ansaloni, Roberto, 41043 Formigine (IT); Lestini, Andrea, 43044 Collecchio (IT)
(74) Representative: Jorio, Paolo

(57) **Abstract**

There is described a separating unit (1) for separating a batch (2) of a first and a second package (3a, 3c, 3b) of a product which is pourable within a tube of packaging material from a row (4) of further packages (3d); separating unit (1) comprises a conveyor (12) for conveying row (4) and first and second package (3a, 3c, 3b) along first direction (A), at least one thrust element (22) movable along a path (Q) having a work portion (Q₁) which extends along first direction (A) and along which it cooperates with first and second package (3a, 3b, 3c) and with further packages (3d) of row (4), and a return portion (Q₂); the work portion (Q₁) comprises an inlet end (25) at which thrust element (22) begins to cooperate with row (4), and an outlet end (26) at which thrust element (22) releases batch (2); and driving means (23) stopping thrust element (22) and moving thrust element(22); separating unit (1) comprises sensor means (30) for generating a signal associated to the length of a gap between first and second package (3a, 3c, 3b) of batch (2); driving means (23) are controllable by sensor means (30), so as to accelerate the speed of thrust element (22).

## Description

The present invention relates to a separating unit for separating a batch of packages of a product which is pourable within a tube of packaging material from a row of packages.

The present invention also relates to a method for separating a batch of packages of a product which is pourable within a tube of packaging material from a row of packages.

As is known, many food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may comprise a layer of fibrous material, e.g. paper, or of mineral-filled polypropylene material; and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH), which is superimposed on a layer of heat-seal plastic material, and is in turn covered with another layer of heat-seal plastic material forming the inner face of the package eventually contacting the food product.

As is known, packages of this sort are produced on fully automatic packaging machines, on which a continuous tube is formed from the web-fed packaging material; the web of packaging material is sterilized on the packaging machine, e.g. by applying a chemical sterilizing agent, such as a hydrogen peroxide solution, which, once sterilization is completed, is removed from the surfaces of the packaging material, e.g. evaporated by heating; and the web of packaging material so sterilized is maintained in a closed, sterile environment, and is folded and sealed longitudinally to form a vertical tube.

The tube is filled continuously downwards with the sterilized or sterile-processed food product, and is sealed and then cut along equally spaced cross sections to form pillow packs, which are then fed to a folding unit to form the finished, e.g. substantially parallelepiped-shaped packages.

As is known, a certain number of folded packages, for example three, may be grouped and shrink-wrapped, so as to form a multi-pack.

For this purpose, a station for the creation of multi-packs is arranged downstream from the folding station.

The station for the creation of multi-packs substantially comprises:
- one or more linear conveyors for conveying respective rows of packages;
- a separating unit fed with rows advancing along a first direction and adapted to separate batches of packages from the rest of respective rows;
- an aligning device which receives batches advancing along a first direction, and which is adapted to align packages of each batch along a second direction slanted with respect to first direction and to advance aligned packages of each batch along a third direction orthogonal to second direction;
- a wrapping unit adapted to wrap batches with a heat-shrinkable material; and
- an oven adapted to heat the wrapping material of batch, so as to complete the formation of the multi-pack.

In particular, packages may be provided with a straw upstream from the station for the creation of multi-packs and are conveyed one after the other by the linear conveyors.

Separating unit substantially comprises a pressure device which, in turn, comprises two first belts which define therebetween a first passage for the rows of packages, and a dividing device which comprises two second belts which define therebetween a second passage for the rows of packages coming out from the pressure device.

In particular, as they pass through the first and the second passages, packages continue to be advanced by conveyors.

Both first and second belts move along respective closed loops, which comprise respective work and return portions. Furthermore, both first and second belts cooperate with the rows along respective work portions.

The first belts of the pressure device are operated to apply a substantial constant force to the rows of packages. Differently, the second belts of the dividing device are cyclically stopped to stop the row of packages coming out from the pressure device and moved at the speed of the conveyors to separate a batch of packages from the row. In particular, second belts move packages for a distance corresponding to the length of the batch to release, and batches are released at an end of the work portions of the second belts, which is opposite to the pressure device.

The aligning device substantially comprises a plurality of bars, which extend along the second direction and cyclically move along a path. The path comprises a work portion which extends along the third direction and a return portion.

Each bar is provided with a pair of aligning elements which may slide along the second direction and arranged on opposite sides of the packages of the batch.

In particular, each bar begins to cooperate with a respective batch at an inlet end of the work portion, align the packages of relative batch along the second direction, and move the respective batch along the third direction towards an outlet end of the work portion.

As batch is moved along the third direction, aligning elements slide along second direction, so as to compact such packages.

Since the pitch between two subsequent bars is very similar to the length of the batch, it is of utmost importance to avoid the presence of relevant gaps between the packages of each separated batch.

To this purpose, the first belts apply a relevant force onto the packages of the row, so as to maintain each package as close as possible to the subsequent package.

However, such relevant force may, under particular circumstances, damage the packages and/or cause the detachment of the straw.

As a consequence, a need is felt within the industry to ensure that the gaps between the packages of separated batches are as small as possible without damaging the packages.

Furthermore, a need is felt to ensure that the gaps between the packages of separated batches are as small as possible while reducing the overall cost of separating unit.

It is an object of the present invention to provide a separating unit for separating a batch of packages of a product which is pourable within a tube of packaging material from a row of packages, designed to meet at least one of the above-identified requirement.

According to the present invention, there is provided a separating unit for separating a batch of packages of a product which is pourable within a tube of packaging material from a row of packages, as claimed in Claim 1.

The present invention also relates to a method for separating a batch of packages of a product which is pourable within a tube of packaging material from a row of packages, as claimed in claim 7.

A preferred, non-limiting embodiment of the present invention will be described by way of example with reference to the accompanying drawings, in which:
Figure 1 schematically shows a top view of a separating unit in accordance with the present invention;

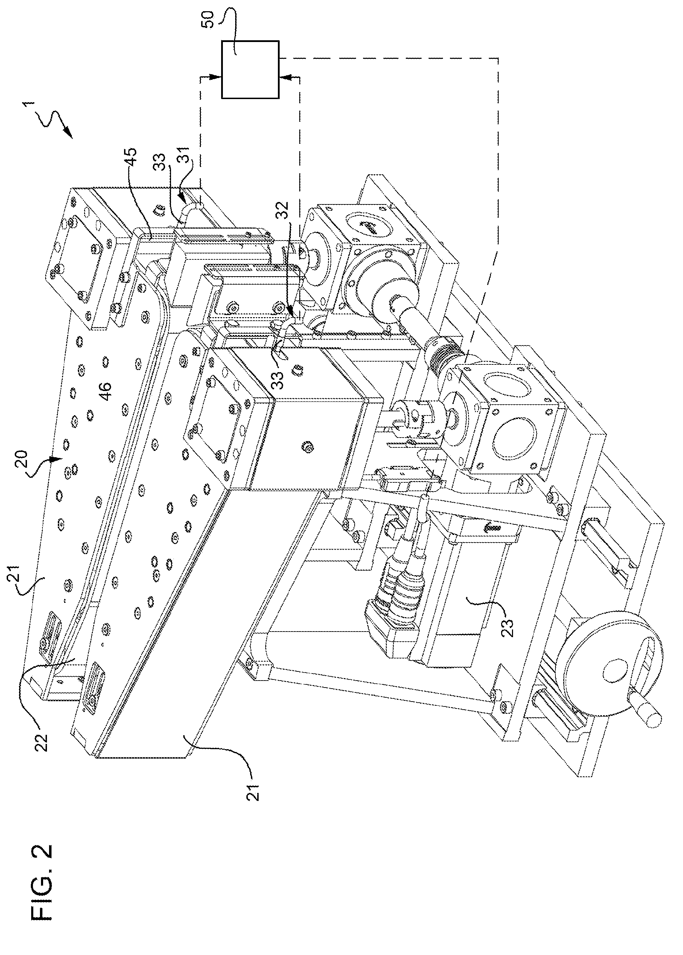

Figure 2 shows a perspective view of some components of the separating unit of Figure 1, with parts removed for clarity;
Figure 3 shows an exploded view of the components of separating unit shown in Figure 2;
Figure 4 shows a perspective view of an aligning device arranged downstream from the separating unit of Figures 1 to 3;
Figure 5 shows a schematic view of the variation of speed of belts of separating unit of Figures 1 to 3 versus the time; and
Figure 6 shows an enlarged view of a package processed by the separating unit of Figures 1 to 3.

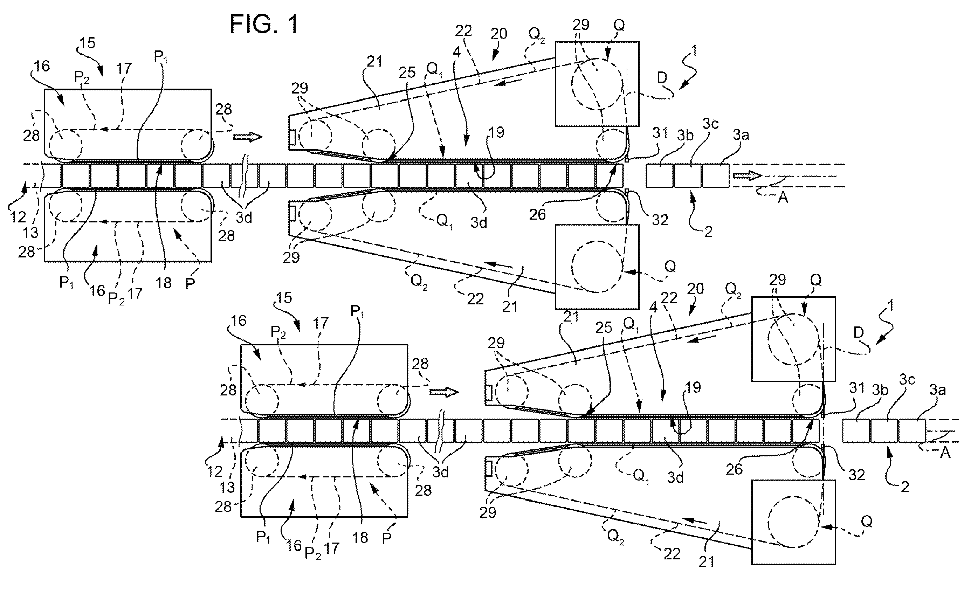

Number 1 in Figure 1 indicates as a whole a separating unit for separating batches 2 of a certain number of packages 3a, 3c, 3b, three in the embodiment shown, of a product which is pourable within a tube (not shown) of packaging material from rows 4 of packages 3d.

More precisely, separating unit 1 separates one after the other batches 2 from row 4. In the following of the present description, reference numbers 3a, 3c, 3b indicate the packages which form the batch 2 separated in a certain instant of time.

It is clear that, in the following of the operation of separating unit 1, a plurality of triples of packages 3d will form respective batches 2 which are separated by separating unit 1.

Furthermore, package 3c is interposed between packages 3a, 3b.

In particular, separating unit 1 is adapted to be incorporated into a station 8 for the creation of a multi-pack, i.e. a module comprising a plurality, three in the embodiment shown, of shrink-wrapped packages 3a, 3b, 3c.

Packages 3a, 3b, 3c, 3d are, in the embodiment shown, parallelepiped-shaped and sealed.

Packages 3a, 3b, 3c, 3d preferably contain a pourable food product, such as pasteurized or UHT milk, fruit juice, wine, etc.

Packages 3a, 3b, 3c, 3d may also contain a food product, which is pourable within a tube of packaging material when producing packages 3a, 3b, 3c, 3d, and sets after packages 3a, 3b, 3c, 3d are sealed. One example of such a food product is a portion of cheese, which is melted when producing packages 3a, 3b, 3c, 3d, and sets after packages 3a, 3b, 3c, 3d are sealed.

The tube is formed in known manner upstream from separating unit 1 by longitudinally folding and sealing a known web (not shown) of heat-seal sheet material, which comprises a layer of paper material covered on both sides with layers of heat-seal plastic material, e.g. polyethylene. In the case of an aseptic package 3a, 3b, 3c, 3d for long-storage products, such as UHT milk, the packaging material comprises a layer of oxygen-barrier material, e.g. aluminium foil, which is superimposed on one or more layers of heat-seal plastic material eventually forming the inner face of package 3a, 3b, 3c, 3d contacting the food product.

The tube of packaging material is then filled with the food product for packaging, and is sealed and cut along equally spaced cross sections to form a number of pillow packs (not shown), which are then transferred to a folding unit where they are folded mechanically to form respective packages 3a, 3b, 3c, 3d.

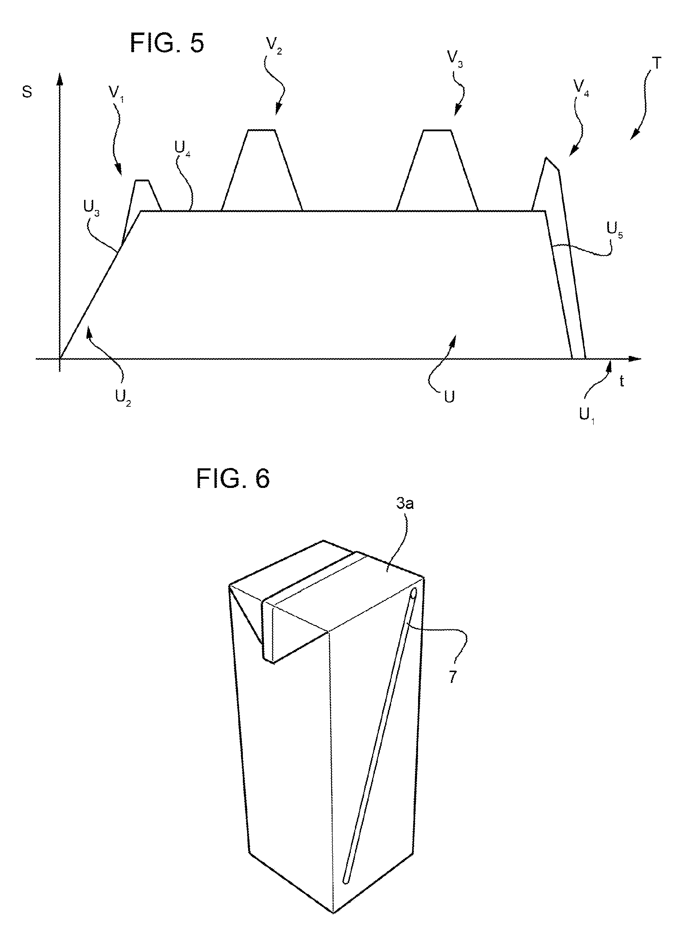

Packages 3a, 3b, 3c, 3d are also provided with respective straws 7 (shown only in Figure 6) downstream from folding unit.

In case that they are intended to be part of a multi-pack, packages 3d are transferred along two rows 4 to station 8. In particular, rows 4 advance parallel to one another and parallel to a common direction A.

Station 8 is arranged downstream from folding unit and substantially comprises:
- separating unit 1 for separating batches 2 from the rest of rows 4 advancing along direction A in the sense indicate by the arrow in Figure 1;
- an aligning device 11 fed with batches 2 from separating unit 1, and adapted to align packages 3a, 3b, 3c of each batch 2 along a direction C slanted with respect to direction A and to feed them along a direction B orthogonal to direction C;
- a wrapping unit (not shown) adapted to wrap batches 2 with a heat-shrinkable material; and
- an oven (not shown) to heat-shrink the material which wraps batches 2, so as to complete the formation of relative multi-packs.

In greater detail, directions A, B, C are horizontal.

Separating unit 1 substantially comprises (Figure 1):
- a pair of conveyors 12 for advancing respective rows 4 of packages 3a, 3b, 3c;
- a pair of pressure devices 15 adapted to exert a force against packages 3d of respective rows 4 advancing along direction A; and
- a pair of dividing devices 20 arranged downstream from respective pressure devices 15 and adapted to separate respective batches 2 from the rest of respective row 4.

In particular, conveyors 12 have respective first portions 13 extending along direction A, and respective second portions 14 extending along direction B and arranged downstream from first portions 13 with reference to the advancing sense of packages 3a, 3b, 3c.

Very briefly, each pressure device 15 (Figure 1) comprises:
- a pair of housings 16 arranged on opposite lateral sides of portions 13 of relative conveyor 12;
- a pair of belts 17 supported by respective housings 16; and
- a motor (not shown) for driving synchronously belts 17.

In particular, each belt 17 moves along a closed loop path P comprising a work portion P₁ parallel to path A and a return portion P₂.

Portions P₁ define therebetween a passage 18 for relative row 4.

Furthermore, as they move along respective work portions P₁, belts 17 cooperate with packages 3d of row 4 advancing along direction A and exert a pressure against such packages 3d.

Housings 16 of each pressure device 15 support a plurality of pulleys 28, which are operatively connected to the motor. In particular, each belt 17 is wound around respective pulleys 28.

Each dividing device 20 substantially comprises:
- a pair of housings 21 arranged on opposite lateral sides of portion 13 of relative conveyor 12 and downstream from pressure device 15;
- two pairs of belts 22 acting as respective thrust elements and supported by respective housings 21; and
- a motor 23 operatively connected to both pairs of belts 22 for synchronously driving in rotation respective such belts 22.

In particular, each belt 22 moves along a closed loop path Q, which comprises a work portion Q₁ parallel to path A and a return portion Q₂.

Work portions Q₁ define therebetween a passage 19 for row 4.

Furthermore, each passage 19 comprises an inlet end 25 at which belts 22 begin to cooperate with relative row 4 of packages 3d coming out from relative pressure device 15, and an outlet end 26 at which belts 22 release relative batch 2 of packages 3a, 3b, 3c.

Accordingly, each work portion Q₁ also extends between inlet end 25 and outlet end 26 of passage 19.

Housings 21 of each dividing device 20 rotatably supports a plurality of pulleys 29.

Pulleys 29 of each dividing device 20 are operated by motor 23, and each belt 22 is wound around respective pulleys 29.

Motor 23 cyclically stops belts 22 and moves belts 22. Accordingly, packages 3d are stopped as motor 23 stops belts 22, and batches 2 arranged at outlet end 26 are released from relative dividing devices 20 towards aligning device 11 as motor 23 moves belts 22.

In other words, belts 22 cyclically brake packages 3d of relative rows 4 and move packages 3a, 3b, 3c of row 4 so as to separate batch 2 arranged at outlet end 26 from the rest of row 4.

Aligning device 11 is arranged downstream from dividing devices 20 with reference to the advancing sense of batches 2 and is arranged above portions 14 of relative conveyors 12.

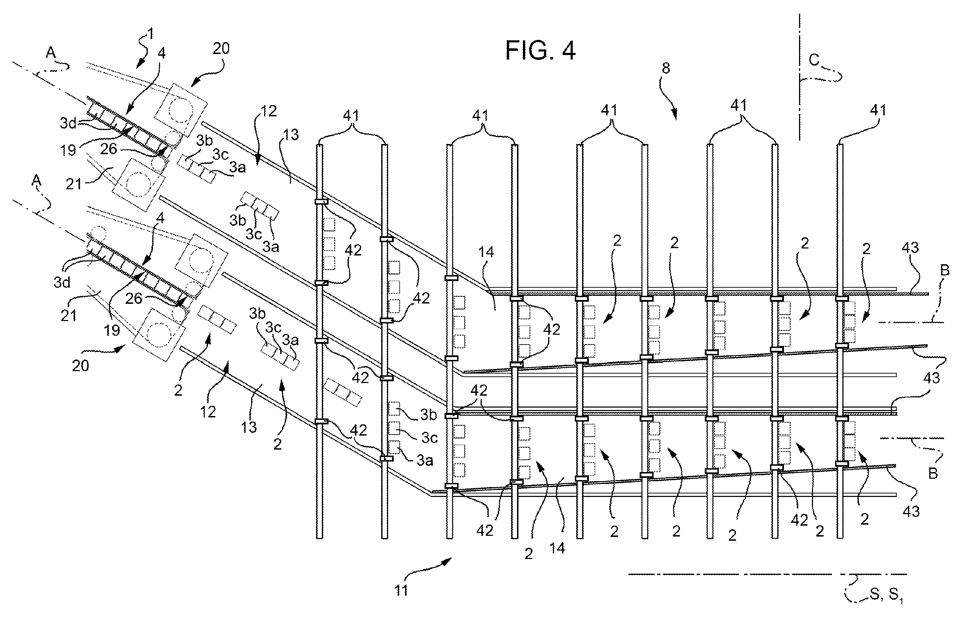

Aligning device 11 is fed with batches 2 separated from rows 4 and advancing along directions A, and substantially comprises a plurality of bars 41 extending along direction C, and movable along a path S (only partially shown in Figure 4) having a work portion S₁ parallel to direction B and a return portion not shown in Figure 4.

In greater detail, packages 3d of each batch 2 are advanced by portion 14 of conveyor 12 along direction B, and are aligned by respective bars 41 along direction C.

Each bar 41 is also provided with a pair of compacting elements 42 which may slide along direction C so as to compact packages 3d of relative batch 2 and complete the formation of multi-pack, as such bar 41 moves along direction B. In particular, compacting elements 42 are arranged on respective opposite sides of batches 2 advanced by relative bars 41.

Aligning device 11 further comprises two pairs of guides 43 arranged over portion 14 of conveyor 12 and onto which compacting elements 42 slide, as they move along direction B together with relative bars 41.

More precisely, guides 43 of each pair converge on the opposite side of dividing device 20 (Figure 4).

Advantageously, separating unit 1 comprises sensor means 30 for generating a signal associated to the length of a first gap between packages 3a, 3c and second gap between packages 3c, 3b of batch 2 which is being separated by the rest of row 4; and motor 23 is controllable by sensor means 30, so as to , on the basis of the signal generated by sensor means 30, belts 22 at a speed greater than the speed of conveyor 12 and to at least partially recover such first and second gap.

More precisely, sensor means 30 comprise an emitting photocell 31 and a receiving photocell 32. In particular, photocells 31, 32 are optical-fiber photocells.

In particular, housings 21 of each dividing device 20 protrudingly bear respective plates 45, 46, which are arranged substantially at outlet end 26 of operative of relative passage 19 and on opposite sides of portion 13 of relative conveyor 12.

Plates 45, 46 protrudingly bear, in turn, respective photocells 31, 32, which therefore are arranged substantially at outlet end 26 of passage 19 and on opposite sides of portion 13 of relative conveyor 12.

More precisely, each photocells 31, 32 comprises a supporting body 33. Supporting body 33 comprises, in turn, a first portion protruding from respective plates 45, 46, and substantially parallel to direction A, and a second portion which extend downwards from first portion and substantially vertical.

Photocells 32 emit an electromagnetic signal along a direction D, which is horizontal and orthogonal to direction A. In particular, the electromagnetic signal is a ray of light.

Such electromagnetic signal may either be received by photocells 32 or interfere with packages 3a, 3b, 3c of batch 2 arranged at outlet end 26 of work portion Q₁ of path Q.

Accordingly, sensor means 30 detect the presence of packages 3a, 3b, 3c at outlet end 26 when photocells 32 do not receive the electromagnetic signal from relative photocells 31. On the contrary, sensor means 30 detect the first (second) gap between packages 3a, 3c (3c, 3b) of batch 2 when photocells 32 receive the electromagnetic signal from relative photocells 31.

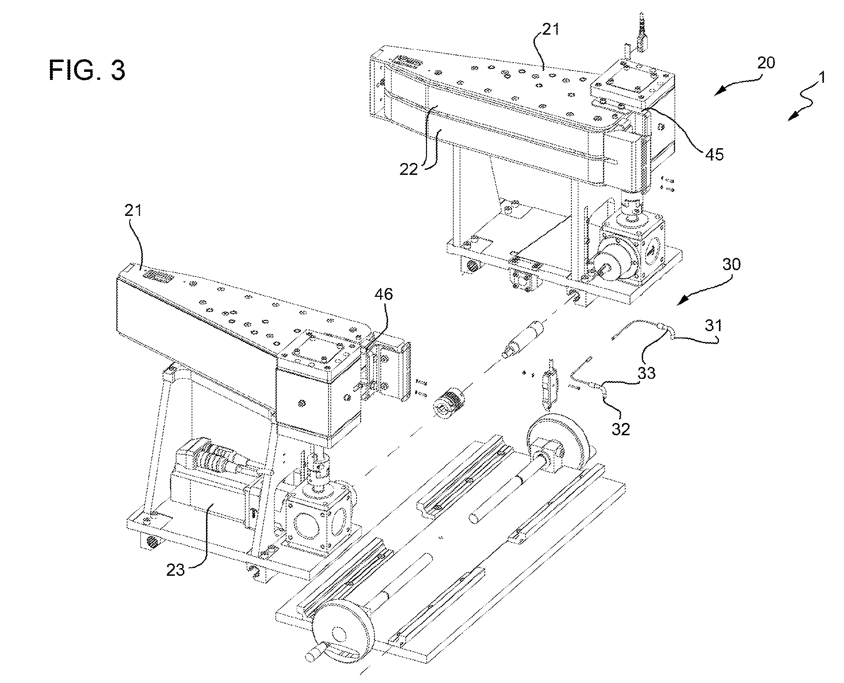

Separating unit 1 also comprises a processing unit 50 (only schematically shown in Figure 3) which generate, on the basis of the signal generated by sensor means 30, a control law for motor 23 and, therefore, for belts 22.

A software program loaded and executed on processing unit 50 employs an algorithm which generates a control law for motor 23 on the basis of the signals coming out from sensor means 30.

In particular, the control law of motor 23 results in a speed profile T (shown in Figure 5) for belts 22.

The locution speed profile is intended in the present description as the variation of speed versus the time. Such variation corresponds to a displacement of portions of belts 22 moving along work portion Q₁ towards aligning device 11 as indicated by the arrow shown in Figure 1.

More precisely, speed profile T is the sum of a base speed profile U and of a plurality of correction speed profiles V₁, V₂, V₃, V₄.

Speed profile U is generated without taking into account the first and the second gap between the packages 3a, 3b; 3b, 3c of batches 2. In other words, the length of the displacement associated to speed profile U, corresponds to the sum of the width of packages 3a, 3b, 3c of batches 2.

Speed profile U comprises a first portion U₁ at which belts 22 are stationary and a second portion U₂ at which belts 22 move.

In particular, portion U₂ comprises one after the other: a segment U₃ along which belts 22 are accelerated, a segment U₄ along which belts 22 moves at a constant speed and a segment U₅ along which belts 22 decelerates.

Correction speed profile V₁ is intended to displace relative package 3a in a reference position with respect to a fixed portion of separating unit 1, e.g. photocells 31, 32.

Furthermore, correction speed profile V₁ is applied by motor 23 when the electromagnetic signals emitted by photocells 31 fail to be received by photocells 32 due to the presence of respective packages 3a between respective photocells 31, 32.

More precisely, correction speed profile V₁ is generated on the basis of the distance between package 3a and the reference position measured by photocells at outlet end 26.

Furthermore, correction speed profile V₁ causes a displacement of belts 22, which is equal to the distance between package 3a and the reference position.

Correction speed profile V₂ is intended to accelerate each package 3c towards relative package 3a, so as to recover the first gap between packages 3a, 3c.

Furthermore, correction speed profile V₂ is applied by motor 23 on belts 22 when photocells 32 receive again the electromagnetic signal emitted by relative photocells 31, due to the fact that first gaps between respective pairs of packages 3a, 3c are arranged between respective photocells 31, 32.

More precisely, correction speed profile V₂ is generated on the basis of the length of first gap between packages 3a, 3c measured by photocells 31, 32 at outlet end 26.

Furthermore, correction speed profile V₂ causes a displacement of belts 22, which is equal to first gap if the first gap is less than a first threshold value, and equals the first threshold value if the first gap is greater than first threshold value so as to not overload package 3a.

Correction speed profile V₃ is intended to accelerate each package 3b towards relative package 3c, so as to recover the second gap between packages 3c, 3b.

Furthermore, correction speed profile V₃ is applied by motor 23 on belts 22 when photocells 32 receive again the electromagnetic signal emitted by relative photocells 31, due to the fact that second gaps between respective pairs of packages 3c, 3b are arranged between respective photocells 31, 32.

More precisely, correction speed profile V₃ is generated on the basis of the length of the second gap between packages 3c, 3b measured by photocells 31, 32 at outlet end 26 of passage 19.

Furthermore, correction speed profile V₃ causes a displacement of belts 22. The length of such displacement is equal to the second gap if the second gap is less than a second threshold value, and equals the second threshold value if the second gap is greater than the second threshold value.

In a first embodiment of the control law performed by processing unit 50, correction speed profile V₄ is intended to accelerate each package 3b towards relative package 3c, so as to recover the portion of first and second gaps between packages 3a, 3c; 3c, 3b which exceed respectively the first and the second threshold value and that have not been recovered by correction speed profile V₂, V₃.

More precisely, correction speed profile V₄ is applied to belts 22 on the basis of the length of segment U₄, and causes a displacement of the belts 22. The length of such displacement is equal to the sum of portions of first and second gap exceeding respectively the first and the second threshold values.

In a second embodiment of the control law performed by processing unit 50, the portion of first gap exceeding the first threshold value is also recovered by correction speed profile V₃, provided that the sum of the length of first gap exceeding the first threshold value and of the length of the second gap does not exceed the second threshold value.

In case that the sum of the length of first gap exceeding the first threshold value and of the length of the second gap exceeds the second threshold value, correction speed profile V₄ recovers the length associated to the difference between the sum of the length of first gap exceeding the first threshold value and of the length of the second gap, and the second threshold value.

In particular, each correction speed profile V₁, V₂, V₃ comprises one after the other: a first segment along which belts 22 are accelerated, a second segment along which belts 22 moves at a constant speed and a third segment along which belts 22 decelerates.

Furthermore, correction speed profile V₄ comprises one after the other: a first segment along which belts 22 are accelerated, and a second segment and a third segment along which belts 22 are decelerated.

More precisely, third segment of correction speed profile V₄ is more sloped than the second segment.

The first segment of correction speed profile V₁ is summed to the end of segment U₃ of speed profile U; the second segment of correction speed profile V₁ is summed in part to the end of segment U₃ and in part to segment U_{4;} and the third segment of correction speed profile V₁ is summed to segment U₄ of speed profile U.

The first segment of correction speed profile V₄ is summed to segment U₄ of speed profile U; the second segment of correction speed profile V₄ is summed in part to the end of segment U₄ and in part to the beginning of segment U₅; and the third segment of correction speed profile V₁ is summed in part to segment U₅ and in part to first portion U₁ of base speed profile U.

The correction speed profiles V₂, V₃ are summed to segment U₄ of base speed profile U.

The operation of unit 1 will be hereinafter described with reference to only one row 4 of packages 3d, to only one batch 2 of packages 3a, 3c, 3b, and to only one separating unit 1.

Portion 13 of conveyor 12 feeds packages 3d along direction A and within passage 18.

Belts 17 of dividing device 20 exert a pressure onto packages 3d.

Then, portion 13 of conveyor 12 feeds row 4 packages 3d within passage 19.

Motor 23 cyclically stop belts 22 so as to stop row 4, and accelerates belts 22. When belts 22 are stopped, conveyor 12 divides batch 2 of package 3a, 3b, 3c at outlet end 26 of passage 19.

More precisely, motor 23 is controlled by processing unit 50 on the basis of the signals coming out from sensor means 30, so as to move belts 22 according to speed profile T.

Speed profile T is the sum of the base speed profile U and of a plurality of correction speed profiles V₁, V₂, V₃, V₄.

In particular, as package 3a reaches outlet end 26, photocell 32 does not receive anymore the electromagnetic signal from photocell 31. At this stage, processing unit 50 adds to base speed profile U correction speed profile V₁.

Correction speed profile V₁ causes a displacement of belts 22 which is substantially equal to the distance between package 3a and the reference position.

Subsequently, photocell 32 receives again the electromagnetic signal from photocell 31 because first gap between packages 3a, 3c has reached outlet 26.

At this stage, processing unit 50 adds correction speed profile V₂ to base profile U.

Correction speed profile V₂ causes a displacement of belts 22 which is equal to:
- the first gap if the first gap is less than the first threshold value; or
- the threshold value if the first gap is equal to or greater than the threshold value.

As a consequence, belts 22 accelerate package 3c towards package 3a, so that the first gap is at least partially recovered.

Afterwards, the passage of packages 3b interrupts the transmission of the electromagnetic signal to photocell 32.

As it pass through the second gap between packages 3c, 3b, the electromagnetic signal emitted by photocell 31 is received again by photocell 32.

Processing unit 50 measures the length of the second gap and generates correction speed profile V₃.

More precisely, in the first embodiment of the control law generated by processing unit 50, correction speed profile V₃ generates a displacement of belts 22 which is equal to:
- the length of the second gap between packages 3c, 3b if the length of such second gap is less than the second threshold value; or
- the length of the second threshold value if the length of the second gap between packages 3a, 3b is greater than or equal to the length of second threshold value.

In the second embodiment of control law generated by processing unit 50, correction speed profile V₃ generates a displacement of belts 22 which is equal to:
- the sum of length of the second gap and of the length of the portion of the first gap exceeding the first threshold value, if such sum is less than the length of second threshold value; or
- the length of the second threshold value if the sum of length of the second gap and of the length of the portion of the first gap exceeding the first threshold value is greater than or equal to the second threshold value.

As a consequence belts 22 accelerate packages 3b with which they cooperate, so as to recover at least partially the second gap.

The passage of package 3b in front of photocell 31, 32 interrupts the transmission of electromagnetic signals between photocells 31, 32.

As a consequence of such interruption, processing unit 50 adds to base speed profile U correction speed profile V₄.

In the first embodiment of the control law, correction speed profile V₄ causes a displacement of belts 22 which is equal to the sum of portions of the first and the second gap, which exceed respectively the first and the second threshold value.

In the second embodiment of the control law, correction speed profile V₄ causes a displacement of belts 22 which is equal to the difference between the sum of the length of the first gap exceeding the first threshold value and of the second gap, and the second threshold value.

In both first and the second embodiment, belts 22 accelerate again package 3b with which they cooperate, so as to recover the first and the second gap.

At this stage, portion 13 of conveyor 12 conveys batch 2 towards aligning device 11 and along direction A.

Bars 41 of aligning device 11 align packages 3a, 3b, 3c of batch 2 along direction C and feed them over the portion 14 of conveyor 12, along direction B.

At the same time, compacting elements 42 slide along direction C, so as to compact packages 3a, 3b, 3c of batch 2 along such direction C.

Wrapping unit receives batch 2 from aligning device 11 and wraps such batch 2 with a heat-shrinkable material.

Finally, the oven heat-shrinks the material which wraps batches 2, so as to complete the formation of relative multi-pack.

The advantages of separating unit 1 and of the method according to the present invention will be clear from the foregoing description.

In particular, thanks to the fact that belts 22 are driven so as to recover the first and the second gap between packages 3a, 3c; 3c, 3b, belts 17 of pressure device 20 are no longer required to exert a relevant force onto packages 3d of row 4.

Accordingly, the risk of damaging the packages 3a, 3b, 3c and of detaching straws 7 therefrom is dramatically reduced.

Furthermore, the reduction in the force exerted by belts 17 results in the reduction of the energy necessary to the operation of separating unit 1.

Even, as first and second gaps are recovered by adding correction speed profiles V₁, V₂, V₃, V₄ to base profile U of belts 22, separating unit 1 could be manufactured without relative pushing device 20, thus resulting particularly economic.

Clearly, changes may be made to separating unit 1 and to the method without, however, departing from the protective scope defined in the accompanying Claims.

In particular, batches 2 could comprise only two packages 3a, 3b. In such case, correction speed profile V₃ would be no longer necessary.

Furthermore, batches 2 could comprise more than three packages 3a, 3c, 3b. In such case, processing unit 50 would control motor 23 so as to apply to belts 22 an additional correction speed profile for each additional gap to be recovered. In other words, there would be an additional correction speed profile for each additional package.

Finally, correction speed profile V₁ may correspond to a deceleration of belts 22.

## Claims

1. A separating unit (1) for separating a batch (2) of at least a first and a second package (3a, 3c, 3b) of a product which is pourable within a tube of packaging material from a row (4) of further packages (3d) ;
said separating unit (1) comprising:
- a conveyor (12) for conveying said row (4) and said first and second package (3a, 3c, 3b) along said first direction (A);
- at least one thrust element (22) movable along a path (Q) having a work portion (Q₁) which extends along said first direction (A), and a return portion (Q₂); said thrust element (22) cooperating, in use, with said first and second package (3a, 3b, 3c) and with said further packages (3d) of said row (4) along said work portion (Q₁) ;
said work portion (Q₁) comprising an inlet end (25) at which said thrust element (22) begins, in use, to cooperate with said row (4), and an outlet end (26), opposite to said inlet end (25), at which said thrust element (22) releases, in use, said batch (2); and
- driving means (23) operatively connected to said thrust element (22);
said driving means (23) cyclically stopping, in use, said thrust element (22) so as to stop said row (4) and so that said conveyor (12) divides, in use, said batch (2) from the rest of said row (4) at said outlet end (26) of said work portion (Q₁), and moving, in use, said thrust element(22);
**characterized by** comprising sensor means (30) for generating a signal associated to at least the length of a gap between said first and second package (3a, 3c, 3b) of said batch (2), which is being separated from the rest of said row (4);
said driving means (23) being controllable by said sensor means (30), so as to accelerate, on the basis of said signal, said thrust element (22) at a speed greater than the speed of said conveyor (12) and to at least partially recover said first gap between said first and second packages (3a, 3b) of said batch (2).

2. The separating unit of claim 1, **characterized in that** said sensor means (30) comprise an emitting photocell (31) for emitting an electromagnetic signal along a second direction (D), and a receiving photocell (32) adapted to receive said electromagnetic signal; said second direction (D) being transversal to said first direction (A);
said emitting and receiving photocells (31, 32) being arranged on opposite lateral sides of said conveyor (12).

3. The separating unit of claims 1 or 2, **characterized in that** said emitting and receiving photocells (31, 32) are arranged at said outlet end (26) of said work portion (Q₁).

4. The separating unit of claims 3, **characterized by** comprising a pair of dividing devices (20);
each dividing device (20) comprising, in turn,:
- a respective housing (21)
- a respective said thrust element (22);
said thrust elements (22) comprising respective belts (22) which are arranged on opposite lateral sides of said row (4) and are supported by respective said housings (21).

5. The separating unit of claim 4, **characterized in that** said emitting and receiving photocells (31, 32) protrude from respective said housings at said outlet end (26).

6. A station for generating a wrapped multi-pack of packages (3a, 3b, 3c, 3d), comprising:
- a separating unit (1) according to anyone of the foregoing claims;
- an aligning device (11) which may be fed by said separating unit (1) with a sequence of said batches (2), and comprising a plurality of bars (41) extending along a third direction (C) transversal to said first direction (A) and movable along a second path (S) comprising at least a second work portion (S₁) which extends along a fourth direction (B) transversal to said third direction (C); said aligning device (11) further comprising a plurality of elements (42) connected to relative said bars (41) and movable along said third direction (C); said bars (41) being adapted to align respective said batches (2) along said third direction (C) and to convey said batches (2) along said fourth direction (B), and said elements (42) being adapted to compact respective said batches (2) along said third direction (C); and
- a wrapping unit which may be fed with said first and second packages (3a, 3c, 3b) of each said batches (2) aligned along said third direction (C) by said aligning device (11), and adapted to wrap said packages (3a, 3c, 3b) of each said batch (2), so as to form a relative said multi-pack.

7. A method for separating a batch (2) of at least a first and a second package (3a, 3c, 3b) of a product which is pourable within a tube of packaging material from a row (4) of further packages (3d), comprising the steps of:
- conveying said row (4) together with said first and second package (3a, 3c, 3b) along a first direction (A) by using a conveyor (12); and
- driving at least a thrust element (22) along a path (Q) having a work portion (Q₁) in common with said first direction (A) and a return portion (Q₂); said thrust element (22) cooperating with said further packages (3d) of said row (4) and with said first and second package (3a, 3b, 3c) along said work portion (Q₁); said work portion (Q₁) comprising an inlet end (25) at which said thrust element (22) begins to cooperate with said row (4) and with said first and second packages (3a, 3c, 3b), and an outlet end (26), opposite to said inlet end (25) at which said thrust element (22) releases said batch (2);
said step of driving comprising the steps of cyclically stopping said thrust element (22) so as to stop said further packages (3d) of said row (4), and moving said thrust element (22);
said conveyor (12) dividing said batch (2) from said row (4) at said outlet end (26) during said step of stopping said thrust element (22);
said method being **characterized in that** said step of driving comprises the steps of measuring at said outlet end (26) the first length of a first gap between said first and second packages (3a, 3c, 3b) of said batch (2); and **in that** said step of moving comprises the step of accelerating, on the basis of said first length, said thrust element (22) and, therefore, said second package (3c, 3b) at a speed greater than the speed of said conveyor (12) so as to at least partially recover said first gap.

8. The method according to claim 7, **characterized in that** said step of moving comprises the step of moving said thrust element (22) according to a base speed profile (U);
said method being further **characterized in that** said step of accelerating the speed of said thrust element (22) comprises the step of summing a first correction speed profile (V₂) to said base speed profile (U) of said thrust element (22);
said first correction speed profile (V₂) being generated on the basis of said first length and corresponding to a first displacement of said thrust element (22); the length of said first displacement being associated to the length of at least one first portion of said first gap.

9. The method according to claim 8, **characterized in that** said step of driving comprises the step of detecting the presence of said first package (3a) at said outlet end (26); and **in that** said step of moving comprises the step of algebraically summing a second correction speed profile (V₁) to said base speed profile (U) of said thrust element (22);
said second speed correction profile (V₁) being generated on the basis of the distance between said first package (3a) and a fixed reference position, and corresponding to a second displacement of said thrust element (22); the length of said second displacement being associated to said distance.

10. The method according to claim 9, **characterized in that** said step of accelerating said thrust element (22) comprises the step of summing a third correction speed profile (V₄) to said base speed profile (U) of said thrust element (22);
said third correction speed profile (V₄) corresponding to a third displacement of said thrust element (22); the length of said third displacement being associated to the length of at least a second portion of said first gap.

11. The method according to claims 8 to 10, **characterized in that** said step of driving comprises the step of measuring, at said outlet end (26), the length of a second gap between said second package (3b) and a third package (3c) of said batch (2) intermediate between said first and second packages (3a, 3b);
said step of accelerating said thrust element (22) comprising the step of summing a fourth correction speed profile (V₃) to said base speed profile (U);
said fourth correction speed profile (V₃) being generated on the basis of the length of said second gap and corresponding to a fourth displacement of said thrust element (22); the length of said fourth displacement being associated to at least the length of a first portion of said second gap.

12. The method of claim 11, **characterized in that** said fourth correction speed profile (V₃) is generated also on the basis of the length of a second portion of said first gap; the length of said fourth displacement being associated to at least the sum of the length of said first portion of said second gap and of the length of said second portion of said first gap.

13. The method of claim 11, **characterized in that** said third correction speed profile (V₄) is generated also on the basis of the length of a second portion of said second gap; the length of said third displacement being associated to at least the sum of the length of a second portion of said first gap and the length of said second portion of said second gap.

14. The method according to anyone of claims 7 to 13, **characterized in that** said step of measuring comprising the steps of:
- emitting, at a first side of said conveyor (12) and at said outlet end (26), an electromagnetic signal along a second direction (D) transversal to said first direction (A), by using a first photocell (31); and
- detecting at said outlet end (26) whether such electromagnetic signal is received or not at a second side, opposite to said first side, of said conveyor (12), by using a second photocell (32).

15. A software product loadable onto a processing unit (50) of a separating unit (1) for separating a batch (2) of at least a first and a second package (3a, 3b, 3c) of a product which is pourable within a tube of packaging material from a row (4) of further packages (3d) advancing, in use, along a first direction (A), and which, when executed, implements the steps of a method as claimed in any one claims 7 to 14.
